# EUROPÄISCHE PATENTSCHRIFT

(11) **EP 2 396 574 B1**
(45) Veröffentlichungstag und Bekanntmachung des Hinweises auf die Patenterteilung: **12.09.2012**
(21) Anmeldenummer: 09744079.6
(22) Anmeldetag: 27.10.2009
(51) Int. Cl.: F16J 15/08

(54) **FLACHDICHTUNG MIT WELLENSTOPPER**
GASKET HAVING A WAVE STOPPER
JOINT PLAT COMPORTANT UN LIMITATEUR DE DEFORMATION ONDULE

(30) Priorität: 16.02.2009 DE 102009009169
(43) Veröffentlichungstag der Anmeldung: 21.12.2011
(73) Patentinhaber: Federal-Mogul Sealing Systems GmbH, 57562 Herdorf (DE)
(72) Erfinder: STETTER, Jürgen, 65589 Hadamar-Steinbach (DE); MÜLLER, Jan, 57290 Neunkirchen (DE); VULPIUS, Andreas Hans, 64560 Riedstadt (DE)
(74) Vertreter: Becker Kurig Straus
(86) Internationale Anmeldenummer: PCT/EP2009/007678
(87) Internationale Veröffentlichungsnummer: WO 2010/091706

(56) Entgegenhaltungen:
- EP-A1- 1 577 589
- DE-A1-102006 021 499
- DE-A1-102006 034 784
- GB-A- 1 033 507

## Beschreibung

Die vorliegende Erfindung betrifft Dichtungen mit Stoppern bzw. Verformungsbegrenzern. Weiterhin betrifft die vorliegende Erfindung betrifft Dichtungen mit wellenförmigen Stoppern bzw. Verformungsbegrenzern. Insbesondere betrifft die vorliegende Erfindung Metalldichtungen. Die vorliegende Erfindung betrifft außerdem metallische Flachdichtungen. Weiterhin betrifft die vorliegende Erfindung metallische Zylinderkopfdichtungen.

Aus dem Stand der Technik sind verschiedene Flachdichtungen mit verschiedenen Stoppern bereits bekannt.

Dokument DE 10217526 A1 betrifft eine Metalldichtung mit einer Stopperlage, die als eine schachbrettartige Prägung in einer Lage der Metalldichtung ausgeführt ist.

Dokument US 2004/0160017 A1 betrifft eine Metalldichtung mit einer Stopperlage, die als eine wabenförmige Prägung in einer Lage der Metalldichtung ausgeführt ist.

Die Offenlegungsschrift DE 10 2004 061 964 A1 betrifft eine Dichtung mit einer Stopperlage, die ringsegmentartig ausgeführt ist, wobei die einzelnen Ringsegmente als gesonderte Lagen ausgeführt sind.

Aus dem Dokument DE 102 006 047 424 ist ein wellenförmiger Verformungsbegrenzer bekannt, der als wellenförmige Einprägung in einer Metalllage ausgeführt ist.

Aus dem Dokument DE 20 121 984 U ist ein wellenförmiger Verformungsbegrenzer bekannt, der als wellenförmige Einprägung in einer Metalllage ausgeführt ist und der in diesem Dokument auch als "wellenförmiger Stopper" bezeichnet wird.

Es ist ebenfalls bekannt, wellenförmige Stopper nicht nur als ein in Wellen gebogenes Blech auszuführen, sondern es ist ebenfalls bekannt, diese Wellen eines wellenförmigen Stoppers als ein Dickenprofil in ein Blech einzuprägen, bzw. hohlzuprägen, wobei ein Stopperprofil entsteht, bei dem auf der Vorder- und Rückseite an den gleichen Stellen Profil-Täler bzw. Profilberge angeordnet sind.

Bisher wurden die Stopperlagen um Hindernisse, wie beispielsweise Bolzenlöcher oder Brennraumausbuchtungen, wie Vorkammern von Dieselmotoren herumgeführt, was den Fertigungsaufwand insbesondere für ein Werkzeug zur Herstellung einer metallischen Flachdichtung sehr kostenaufwändig gestaltet.

Der vorliegenden Erfindung liegt die Aufgabe zugrunde, den Aufwand bei der Herstellung einer metallischen Flachdichtung mit einem wellenförmigen Stopper zu senken.

Es ist weiterhin wünschenswert, den Herstellungsaufwand für Press/Prägewerkzeuge für metallische Flachdichtungen insbesondere für Flachdichtungen mit Engstellen, wie z. B. Ventiltaschen und Durchgangslöchern im Bereich eines Verpressungsbegrenzers zu reduzieren, der auch als wellenförmiger Stopper ausgeführt sein kann.

In einer Ausführungsform der vorliegenden Erfindung wird eine metallische Flachdichtung mit mindestens einer metallischen Lage bereitgestellt. Die metallische Dichtung umfasst dabei mindestens einen Dichtbereich und einen Verpressungsbegrenzer-Bereich. Der Verpressungsbegrenzer-Bereich ist dabei in mindestens einer Lage der metallischen Dichtung als Wellenprofil ausgebildet. Das Wellenprofil ist im Bereich des Verpressungsbegrenzers durch mehrere Wellen gebildet, die entlang konzentrischer Kreislinien verlaufen.

Mindestens eine erste Welle verläuft dabei entlang mindestens eines Kreisbogens, ist nicht geschlossen und verläuft in mindestens einem vorbestimmten Kreissektor nicht.

Die Flachdichtung umfasst mindestens eine zweite, zu der ersten Welle konzentrische, nicht geschlossene Welle. Die zweite, nicht-geschlossene Welle hat einen anderen Radius als die erste Welle. Die zweite Welle verläuft mindestens in dem Kreissektor, in dem die erste Welle nicht verläuft. Die zweite Welle verläuft in mindestens einem vorbestimmten Kreissektor nicht, in dem sich die erste Welle erstreckt.

Die erste und die zweite Welle ergänzen sich dabei (zumindest teilweise) auf unterschiedlichen Radien auf der Dichtung, um über den gesamten Bereich des Verpressungsbegrenzers eine gleichmäßige Verpressungsbegrenzungswirkung erzielen zu können.

In der vorliegenden Erfindung kann die Dichtung mehrere Dichtbereiche und mehrere Verpressungsbegrenzer-Bereiche umfassen. In der vorliegenden Erfindung kann der Dichtbereiche den Verpressungsbegrenzer-Bereich umschließen. In der vorliegenden Erfindung kann der Dichtbereich auch von dem Verpressungsbegrenzer-Bereich umgeben sein.

In einer beispielhaften Ausführungsform umfasst die metallische Flachdichtung weiter mindestens eine Durchgangsöffnung, die von dem Dichtbereich und dem Verpressungsbegrenzer-Bereich umschlossen wird. Die Durchgangsöffnung kann beispielsweise einen Teil eines Brennraums einer Wärmekraftmaschine darstellen.

Es ist ebenfalls vorgesehen, die Flachdichtung zur Abdichtung eines fluidgefüllten Raums wie Öl oder Gas bzw. Vakuum zu verwenden. Die Durchgangsöffnung ist zur erfinderischen Wirkung der erfindungsgemäßen Dichtung nicht notwendig, da eine Dichtung auch nur als Verschluss einer Öffnung dienen kann. In diesem Fall kann eine Dichtung ohne Durchgangsöffnung ggf. besser dichten, da nur eine Dichtfläche abgedichtet werden muss.

In einer weiteren beispielhaften Ausführungsform der vorliegenden Erfindung ist die Durchgangsöffnung mit Ausbuchtungen versehen ist, und der Bereich des Verpressungsbegrenzers ist eingebuchtet. In dieser Ausführungsform ist mindestens eine Welle im Bereich des Verpressungsbegrenzers an der (mindestens einen) Einbuchtung unterbrochen, diese (mindestens eine) fehlende Welle wird dabei und durch (mindestens eine) außen am Verpressungsbegrenzer zusätzlich angeordnete Welle wieder ausgeglichen. Somit wird verhindert, dass der Verpressungsbegrenzer durch schmalere Bereiche in seiner Funktion geschwächt ist.

In einer zusätzlichen Ausführungsform weist die metallische Flachdichtung in dem Bereich des Verpressungsbegrenzers Durchgangslöcher auf. Durch die Durchgangslöcher werden die in dem Bereich des Verpressungsbegrenzers verlaufenden konzentrischen Wellen unterbrochen, wodurch die Funktion des Verpressungsbegrenzers in diesem Bereich geschwächt ist. Diese Schwächung wird in dieser Ausführungsform erfindungsgemäß durch im Bereich der Durchgangslöcher zusätzlich angeordnete Wellen ausgeglichen.

In einer weiteren Ausführungsform der vorliegenden Erfindung verlaufen in radialer Richtung von dem Zentrum der abzudichtenden Durchgangsöffnung aus immer im Wesentlichen die gleiche Anzahl von Wellen kreisbogen- oder kreisförmig um dieses Zentrum herum. Damit ist der wirksame Bereich des Verpressungsbegrenzers im Wesentlichen immer gleich breit, unabhängig davon, ob sich Ausnehmungen in der Dichtung im Bereich des Verpressungsbegrenzers befinden, oder nicht. Da die Anzahl der Wellen immer als ganzzahlig anzusehen ist, bedeutet im "Wesentlichen gleich" eine Abweichung von maximal eins.

In einer weiteren beispielhaften Ausführungsform der vorliegenden Erfindung überlappen sich die erste und zweite Welle in einem Sektor um mindestens die halbe Breite des Verpressungsbegrenzer-Bereichs. Damit kann erreicht werden, dass die Außen- bzw. Innenkontur des Verpressungsbegrenzer-Bereichs gleichmäßiger ausgebildet ist, womit Kanten vermieden werden können.

In einer weiteren Ausführungsform der metallischen Flachdichtung nimmt die Höhe der Wellen an ihren Enden nach und nach ab. Dadurch können wie im obigen Fall Belastungsspitzen am Rand des Verpressungsbegrenzers vermieden werden.

In einer weiteren Ausführungsform sind die Wellen durch Sicken in der mindestens einen metallischen Lage gebildet. Der Verpressungsbegrenzer ist dabei durch eine Art "Wellblech" gebildet, was die Steifheit des Verpressungsbegrenzes herabsetzt. Diese Bauform kann besonders einfach hergestellt werden, da die Metalllage(n) der Metalldichtung lediglich gebogen werden müssen.

In einer weiteren Ausführungsform sind die Wellen durch Dickenänderungen der mindestens einen metallischen Lage gebidet. Der Verpressungsbegrenzer ist dabei durch ein Dickenprofil gebildet, was die Steifheit des Verpressungsbegrenzes erhöht.

In einer Ausführungsform der vorliegenden Erfindung ist die metallische Flachdichtung eine Zylinderkopfdichtung.

Gemäß eines anderen Aspekts wird ein Präge-/Press-Werkzeug zur Herstellung einer metallische Flachdichtung wie vorstehend beschrieben bereitgestellt. Das Präge/Presswerkzeug ist dabei so ausgeführt, dass es mindestens eine Lage einer erfindungsgemäßen Flachdichtung mit einem Verpressungsbegrenzer versehen kann, wie er vorstehend beschrieben ist. Vorzugsweise ist das Werkzeug ebenfalls mit Strukturen versehen, die Durchgangslöcher ausstanzen, und Dichtsicken in Lagen einer metallischen Flachdichtung drücken, pressen oder prägen können.

In der Zeichnung wird die Erfindung anhand von verschiedenen Ausführungsformen von erfindungsgemäßen Metalldichtungen gegenüber dem Stand der Technik dargestellt.
Figuren 1 und 2 zeigen Ausführungsformen von wellenförmigen Stoppern, wie sie im Stand der Technik bekannt sind.
Figuren 3 und 4 zeigen Ausführungsformen einer erfindungsgemäßen Dichtung ohne und mit gegenseitiger Überdeckung von ersten und zweiten Wellen des als wellenförmiger Stopper ausgeführten Verpressungsbegrenzers.
Figuren 5 und 6 zeigen zwei Ausführungsformen einer erfindungsgemäßen Dichtung, einmal mit mehren Durchgangslöchern, die im Bereich des Verpressungsbegrenzers angeordnet sind, und einmal als Beispiel für eine erfindungsgemäße Dichtung mit einem ringförmigen Verpressungsbegrenzer.

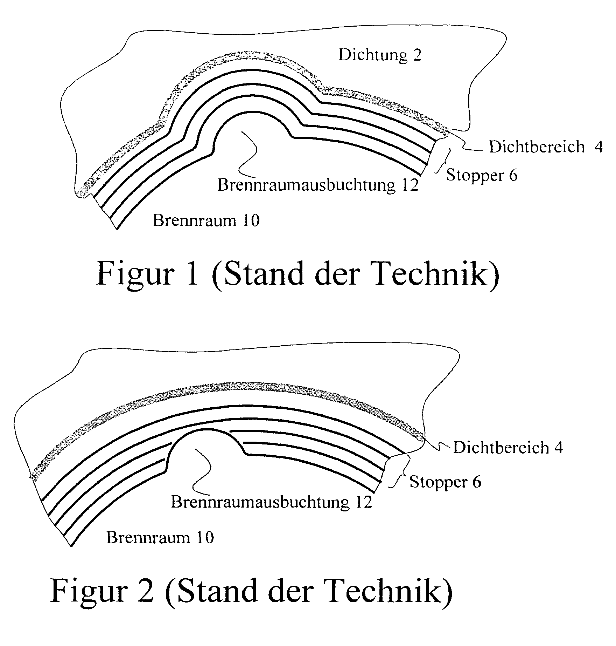

In Figur 1 ist ein Ausschnitt einer herkömmlichen Flachdichtung (Zylinderkopfdichtung) mit wellenförmigem Stopper (Verpressungsbegrenzer) 6 für einen Verbrennungsmotor mit einer seitlichen Brennraumausbuchtung dargestellt. Die einzelnen Wellen des wellenförmigen Stoppers 6 sind um die Brennraumausbuchtung herumgeführt, was die Herstellung des Werkzeugs bedeutend erschwert, da das Werkzeug nicht auf einer Drehmaschine gefertigt, sondern nur auf einer Fräsmaschine mit sehr viel mehr Aufwand hergestellt werden kann.

Figur 2 stellt einen ähnlichen Ausschnitt einer ebenfalls herkömmlichen Flachdichtung 2 (Zylinderkopfdichtung) mit wellenförmigen Stopper (Verpressungsbegrenzer) 6 dar, dessen Herstellungswerkzeug auf einer Drehmaschine hergestellt werden kann. Wie in Figur 1 weist der Verbrennungsmotor bzw. die Zylinderkopfdichtung eine seitliche Brennraumausbuchtung 12 auf. Die einzelnen Wellen des wellenförmigen Stoppers 6 sind nicht um die Brennraumausbuchtung 12 herumgeführt, was die Herstellung des Werkzeugs vereinfacht, die Funktion der Dichtung, insbesondere jedoch des Verpressungsbegrenzers einschränkt.

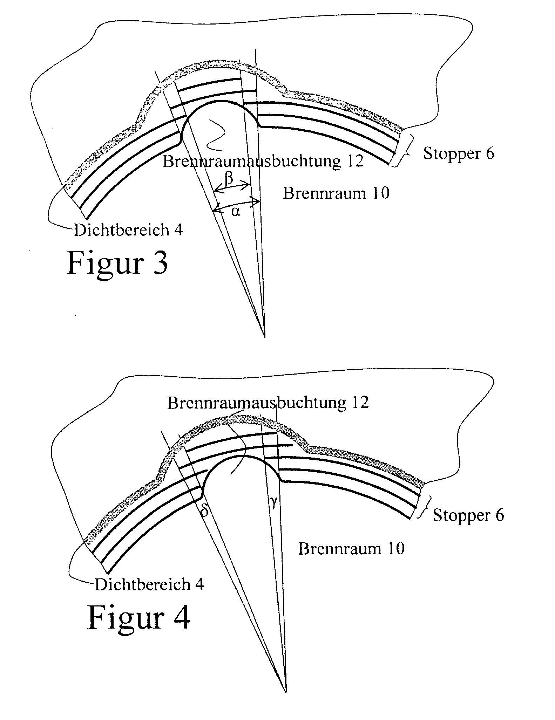

Figur 3 stellt einen Ausschnitt einer erfindungsgemäßen Flachdichtung (Zylinderkopfdichtung) 2 mit einem erfindungsgemäßen wellenförmigen Stopper (Verpressungsbegrenzer) 6 dar. Wie die in Figur 2 dargestellte Zylinderkopfdichtung 2 ist der wellenförmigen Stopper 6 mit einer Ausnehmung versehen. Die einzelnen Wellen des wellenförmigen Stoppers 6 sind nicht um die Brennraumausbuchtung 12 herumgeführt, sondern schließen vor der Ausnehmung ab. In dem Bereich der Ausnehmung 12 sind die Wellen des wellenförmigen Stoppers 6 durch zusätzliche konzentrische Wellen weitergeführt, die sich jeweils in den Sektoren (α und β) erstrecken, in denen die Wellen des wellenförmigen Stoppers 6 durch die Brennraumausbuchtung unterbrochen sind. Wenn die Wellen des wellenförmigen Stoppers 6 vom Brennraum 10 aus nach außen durchnummeriert werden, wird die erste Welle in Sektor α durch die dritte Welle des Verpressungsbegrenzers oder wellenförmigen Stoppers 6 weitergeführt. Genauso ist die zweite Welle in Sektor β durch die vierte Welle des Verpressungsbegrenzers/wellenförmigen Stoppers 6 weitergeführt.

Figur 4 stellt den gleichen Ausschnitt einer erfindungsgemäßen Flachdichtung (Zylinderkopfdichtung) 2 mit einem erfindungsgemäßen wellenförmigen Stopper (Verpressungsbegrenzer) 6 dar, Ähnlich der in Figur 3 dargestellten Zylinderkopfdichtung ergänzen sich auch hier einzelne Wellen des wellenförmigen Stoppers 6, um eine Schwächung der Funktion des Verpressungsbegrenzers 6 auszugleichen. In der Ausführungsform von Figur 4 überlappen sich die einzelnen konzentrischen Wellen jeweils in den Sektoren (γ und δ). Die erste Welle überschneidet sich dabei in Sektor δ mit der dritten Welle. Genauso überschneidet sich die zweite Welle in Sektor γ mit der vierten Welle. Je nach Wahl der Sektoren α und β bzw. γ und δ kann die Außenkontur des Verpressungsbegrenzers 6 frei gewählt werden, um beispielsweise die Form eines um den wellenförmigen Stopper 6 verlaufenden Dichtbereichs 4 optimieren zu können.

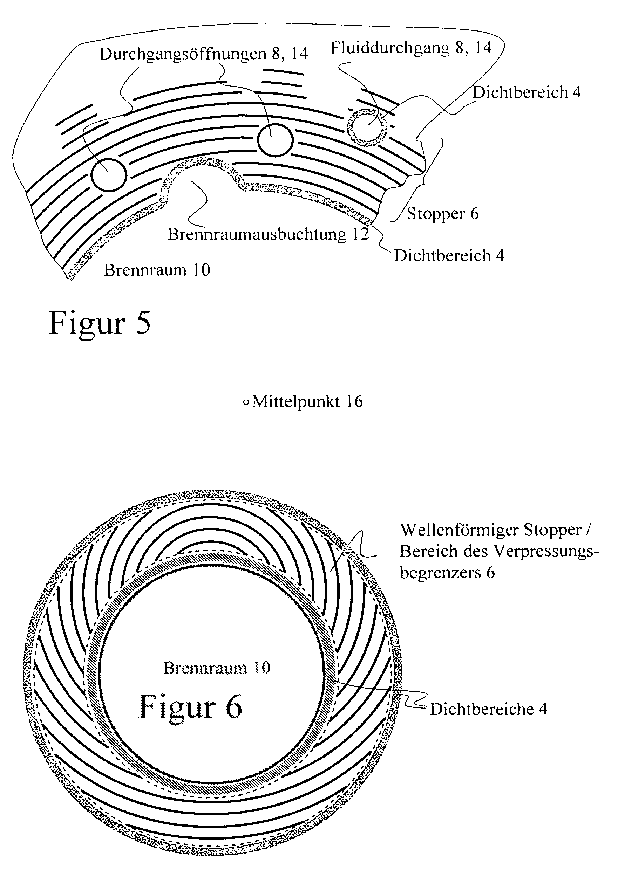

Figur 5 zeigt eine Ausführungsformen einer erfindungsgemäßen Dichtung 2 mit einem Verpressungsbegrenzer 6 mit sieben einzelnen Wellen. Die Dichtung 2 weist dabei im Bereich des Verpressungsbegrenzers 6 sowohl eine Brennraumausnehmung 12, Durchgangslöcher 14 als auf einen durch einen Dichtbereich 4 begrenzten Fluiddurchgang auf. Jede der sieben unterbrochenen Wellen des wellenförmigen Stoppers 6 wurde durch eine zusätzliche außen am wellenförmigen Stopper 6 angeordnete zusätzliche Welle ergänzt, um die Funktion des wellenförmigen Stoppers 6 zu gewährleisten. Durch die gepunktete Linie ist zudem eine optimierte Außenkontur eines wellenförmigen Stoppers 6 dargestellt, die im Wesentlichen die Fläche des Verformungsbegrenzers bei möglichst glatter Außenkontur aufrechterhält.

Figur 6 zeigt lediglich eine Veranschaulichung des Prinzips des Verpressungsbegrenzers 6 der vorliegenden Erfindung in einem Grenzfall. In Figur 6 ist eine beliebige Fläche (hier ein Kreisring) durch eine Reihe von konzentrischen Wellen als wellenförmiger Stopper oder Verpressungsbegrenzer 6 ausgeführt. Die konzentrischen Wellen als wellenförmigen Stopper 6 füllen dabei die Ringfläche des wellenförmigen Stoppers 6 ähnlich einer Kreisschraffur vollständig aus, wobei die konzentrischen Wellen nicht konzentrisch zu dem Bereich des Verpressungsbegrenzers 6 sind. Es sollte klar sein, dass sich jede beliebige Fläche, in der sich ein Verpressungsbegrenzer 6 erstrecken soll, mit einem wellenförmigen Stopper 6 der dargestellten Art ausfüllen lässt. Damit ist verdeutlicht, dass die vorliegende Erfindung ebenfalls für beliebige geformte Flachdichtungen geeignet ist. Es sollte ebenfalls klar sein, dass auch Zylinderkopfdichtungen mit mehreren Brennraumöffnungen mit einem erfindungsgemäßen wellenförmigen Stopper oder Verpressungsbegrenzer 6 hergestellt werden können. In diesem Fall kann das Prinzip der vorliegenden Erfindung für jeden Verpressungsbegrenzer 6 um jede Brennraumöffnung 10 separat angewendet werden.

Die in Figuren 3 bis 6 dargestellten Dichtungen können mit einem Werkzeug hergestellt werden, das zum großen Teil auf einer Drehmaschine gefertigt werden kann.

Im Prinzip kann das Werkzeug zum Herstellen einer erfindungsgemäßen Dichtung hergestellt werden, indem in das Werkzeug eine Gesamtwellenanzahl (n+x) gedreht wird, wobei zur Aufrechterhaltung der Stopperpressung n Wellen erforderlich sind. Im Bereich einer Engstelle (einer Ausbuchtung, eines Durchgangslochs oder dergleichen) werden in einem Sektor eine Zahl von x Wellen entfernt und gleichzeitig eine Zahl x der äußeren Wellen stehengelassen. Im übrigen äußeren Bereich wird die Wellenanzahl auf n reduziert. In Übergangsbereichen zwischen innen weggenommenen und außen stehengelassenen Wellen können sich für die Aufrechterhaltung der Stopperpressung auch im Übergangsbereich, die inneren und die äußeren Wellen mit einer Breite von bis zu n Wellen überlappen.

## Patentansprüche

1. Metallische Flachdichtung (2) mit mindestens einer metallischen Lage, wobei die metallische Dichtung mindestens einen Dichtbereich (4) und einen Verpressungsbegrenzer-Bereich (6) aufweist, der in mindestens einer Lage der metallischen Dichtung als Wellenprofil ausgebildet ist, wobei das Wellenprofil im Bereich des Verpressungsbegrenzers (6) durch mehrere Wellen gebildet ist, die auf konzentrischen Kreislinien verlaufen, **dadurch gekennzeichnet, dass**
mindestens eine erste Welle entlang mindestens eines vorbestimmten Kreisbogens verläuft, und in mindestens einem vorbestimmten Kreissektor (α, β) nicht verläuft, und
dass die Flachdichtung (2) mindestens eine zweite unterbrochene Welle aufweist, die zu der ersten Welle konzentrisch ist, einen anderen Radius als die erste Welle aufweist, und mindestens in dem Kreissektor (α, β) verläuft, in dem die erste Welle nicht verläuft, und in mindestens einem Kreissektor nicht verläuft, in dem die erste Welle verläuft.

2. Metallische Flachdichtung gemäß Anspruch 1, weiter umfassend mindestens eine Durchgangsöffnung (8) wie eine Brennraumöffnung (10), die von dem Dichtbereich (4) und dem Verpressungsbegrenzer-Bereich (6) umschlossen wird.

3. Metallische Flachdichtung gemäß Anspruch 2, **dadurch gekennzeichnet, dass** die Durchgangsöffnung (8) mit Ausbuchtungen (12) versehen ist, wobei der Bereich des Verpressungsbegrenzers eingebuchtet ist.

4. Metallische Flachdichtung gemäß einem der vorstehenden Ansprüche, **dadurch gekennzeichnet, dass** in dem Bereich des Verpressungsbegrenzers (6) Durchgangslöcher (14) angeordnet sind.

5. Metallische Flachdichtung gemäß einem der vorstehenden Ansprüche, **dadurch gekennzeichnet, dass** in radialer Richtung von dem Zentrum (16) der abzudichtenden Durchgangsöffnung (8) aus gesehen im Wesentlichen die gleiche Anzahl von Wellen kreisbogen- oder kreisförmig um dieses Zentrum (16) verlaufen.

6. Metallische Flachdichtung gemäß einem der vorstehenden Ansprüche, die erste und zweite Wellen sich mindestens mit der halben Breite des Verpressungsbegrenzer-Bereichs in einem Sektor (γ, δ) überlappen.

7. Metallische Flachdichtung gemäß einem der vorstehenden Ansprüche, wobei die Höhe der Wellen zu ihren Enden hin nach und nach abnimmt.

8. Metallische Flachdichtung gemäß einem der vorstehenden Ansprüche, wobei Wellen durch Sicken der mindestens einen metallischen Lage gebildet sind.

9. Metallische Flachdichtung gemäß einem der vorstehenden Ansprüche, wobei Wellen durch Dickenänderungen der mindestens einen metallischen Lage gebildet sind.

10. Metallische Flachdichtung gemäß einem der vorstehenden Ansprüche, wobei die Metallische Flachdichtung eine Zylinderkopfdichtung ist.

## Claims

1. A metallic flat gasket (2) with at least one metallic layer, wherein the metallic gasket includes at least one sealing area (4) and a compression limiting area (6) that is in the form of a corrugated profile in at least one layer of the metallic gasket, wherein the corrugated profile is formed in the area of the compression limiter (6) by several corrugations that extend on concentric circular lines,
**characterized in that**
at least one first corrugation extends along at least one predetermined arc of a circle and does not extend in at least one predetermined sector (α, β) of a circle, and **in that** the flat gasket (2) features at least one second interrupted corrugation that extends concentric to the first corrugation, has a different radius than the first corrugation and extends at least in the sector (α, β) of a circle, in which the first corrugation does not extend, and does not extend in at least one sector of a circle, in which the first corrugation extends.

2. The metallic flat gasket according to claim 1, further including at least one through-opening (8) such as a combustion chamber opening (10) that is enclosed by the sealing area (4) and the compression limiting area (6).

3. The metallic flat gasket according to claim 2, **characterized in that** the through-opening (8) is provided with convexities (12) and the area of the compression limiter is indented.

4. The metallic flat gasket according to one of the preceding claims, **characterized by** through-holes (14) provided in the area of the compression limiter (6).

5. The metallic flat gasket according to one of the preceding claims, **characterized in that** substantially the same number of corrugations extend around the center (16) of the through-opening (8) to be sealed in a circular or arc-shaped fashion as seen in radial direction from this the center (16).

6. The metallic flat gasket according to one of the preceding claims, wherein the first and the second corrugations overlap one another in a sector (γ, δ) by at least half the width of the compression limiting area.

7. The metallic flat gasket according to one of the preceding claims, wherein the height of the corrugations gradually decreases toward their ends.

8. The metallic flat gasket according to one of the preceding claims, wherein the corrugations are formed by beads of the at least one metallic layer.

9. The metallic flat gasket according to one of the preceding claims, wherein the corrugations are formed by thickness variations of the at least one metallic layer.

10. The metallic flat gasket according to one of the preceding claims, wherein the metallic flat gasket is a cylinder head gasket.

## Revendications

1. Joint plat métallique (2) comprenant au moins une couche métallique, sachant que le joint métallique présente au moins une zone étanche (4) et une zone de limitateur de déformation (6) qui est formée dans au moins une couche du joint métallique en tant que profilé ondulé, sachant que le profilé ondulé dans la zone de la zone de limitateur de déformation (6) est formé par plusieurs ondulations qui passent sur des circonférences concentriques, **caractérisé en ce**
**qu'**au moins une première ondulation passe au moins le long d'un arc de cercle prédéterminé et ne passe pas dans au moins un secteur de cercle prédéfini (α, β), et
**que** le joint plat (2) présente au moins une deuxième ondulation interrompue qui est concentrique par rapport à la première ondulation, présente un autre rayon que la première ondulation et passe au moins dans le secteur de cercle (α, β) dans lequel la première ondulation ne passe pas et ne passe pas dans au moins un secteur de cercle dans lequel la première ondulation passe.

2. Joint plat métallique selon la revendication 1, comprenant en outre au moins une ouverture traversante (8) ainsi qu'une ouverture de chambre de combustion (10) entourée par la zone étanche (4) et la zone de limitateur de déformation (6).

3. Joint plat métallique selon la revendication 2, **caractérisé en ce que** l'ouverture traversante (8) est dotée de bombements (12), sachant que la zone de limitateur de déformation est en creux.

4. Joint plat métallique selon l'une des revendications précédentes, **caractérisé en ce que** des trous traversants (14) sont disposés dans la zone de limitateur de déformation (6).

5. Joint plat métallique selon l'une des revendications précédentes, **caractérisé en ce que** vu dans le sens radial du centre (16) de l'ouverture traversante (8) à étanchéifier, essentiellement le même nombre d'ondulations en arc de cercle ou circulaires passent autour de ce centre (16).

6. Joint plat métallique selon l'une des revendications précédentes, les première et deuxième ondulations se chevauchent au moins avec la demi-largeur de la zone de limitateur de déformation dans un secteur (γ, δ).

7. Joint plat métallique selon l'une des revendications précédentes, dans lequel la hauteur des ondulations diminue petit à petit en direction de leurs extrémités.

8. Joint plat métallique selon l'une des revendications précédentes, dans lequel des ondulations sont formées par le nervurage de l'au moins une couche métallique.

9. Joint plat métallique selon l'une des revendications précédentes, dans lequel des ondulations sont formées par des modifications d'épaisseur de l'au moins une couche métallique.

10. Joint plat métallique selon l'une des revendications précédentes, dans lequel le joint plat métallique est un joint de culasse.
